# EUROPÄISCHE PATENTSCHRIFT

(11) **EP 3 395 014 B1**
(45) Veröffentlichungstag und Bekanntmachung des Hinweises auf die Patenterteilung: **14.07.2021**
(21) Anmeldenummer: 16706164.7
(22) Anmeldetag: 19.02.2016
(51) Int. Cl.: G05B 23/02, G06F 11/07, H02M 7/483

(54) **VERFAHREN ZUM ERZEUGEN EINES FEHLERBERICHTS**
METHOD FOR GENERATING AN ERROR REPPORT
PROCEDE DE GENERATION D'UN RAPPORT D'ERREUR

(43) Veröffentlichungstag der Anmeldung: 31.10.2018
(73) Patentinhaber: Siemens Energy Global GmbH & Co. KG, 81739 München (DE)
(72) Erfinder: LANG, Jörg, 95346 Stadtsteinach (DE); SCHULZE, Marco, 90427 Nürnberg (DE); WIENERS-REHRMANN, Tobias, 37688 Beverungen (DE)
(86) Internationale Anmeldenummer: PCT/EP2016/053575
(87) Internationale Veröffentlichungsnummer: WO 2017/140378

(56) Entgegenhaltungen:
- EP-A1- 2 458 726
- DE-A1- 3 044 988
- DE-A1- 19 937 752
- DE-A1-102014 213 058
- US-A1- 2012 207 027

## Beschreibung

Die Erfindung betrifft ein Verfahren zum Erzeugen eines Fehlerberichts über einen elektrischen Stromrichter.

Stromrichter (power converter) sind leistungselektronische Schaltungen zum Umwandeln von elektrischer Energie. Mit Stromrichtern kann Wechselstrom in Gleichstrom, Gleichstrom in Wechselstrom, Wechselstrom in Wechselstrom anderer Frequenz und/oder Amplitude oder Gleichstrom in Gleichstrom anderer Spannung umgewandelt werden. Stromrichter können eine Vielzahl von gleichartigen Modulen (die auch als Submodule bezeichnet werden) aufweisen, welche elektrisch in Reihe geschaltet sind. Diese Module weisen jeweils mindestens zwei elektronische Schaltelemente und einen elektrischen Energiespeicher auf. Solche Stromrichter werden als modulare Multilevelstromrichter bezeichnet und gehören zu den VSC-Stromrichtern (VSC = voltage sourced converter). Durch die elektrische Reihenschaltung der Module lassen sich hohe Ausgangsspannungen erreichen. Die Stromrichter sind einfach an unterschiedliche Spannungen anpassbar (skalierbar) und eine gewünschte Ausgangsspannung kann relativ genau erzeugt werden. Diese Stromrichter werden oftmals im Hochspannungsbereich eingesetzt, beispielsweise als Stromrichter bei Hochspannungs-Gleichstrom-Übertragungsanlagen oder als Blindleistungskompensatoren bei flexiblen Drehstromübertragungssystemen.

Um den Stromrichter auch bei einem Auftreten eines Defektes an einem oder mehreren Modulen weiterbetreiben zu können, weist der Stromrichter Reserve-Module auf, die bei einem defektfreien Stromrichter überzählig sind (und daher bei einem defektfreien Stromrichter nicht für den Betrieb des Stromrichters benötigt werden). Wenn bei einem Modul ein Defekt auftritt, dann wird dieses defekte Modul überbrückt (kurzgeschlossen), und anstelle des defekten Moduls wird eines der Reserve-Module benutzt. Wenn nach einer längeren Betriebsdauer des Stromrichters mehrere Module defekt sind und als Ersatz dementsprechend mehrere Reserve-Module benutzt werden, dann können die defekten Module im Rahmen einer Wartung des Stromrichters erneuert werden. Nach der Wartung stehen dann die Reserve-Module wieder als überzählige Module für das nächste Auftreten eines Defekts zur Verfügung.

Manchmal treten Defekte nicht an dem Modul, sondern an der Kommunikationsverbindung auf, die ein Modul mit einer Steuereinrichtung des Stromrichters verbindet. Bei einer Wartung des Stromrichters sind also die defekten Module und/oder defekte Kommunikationsverbindungen zwischen Modulen und der Steuereinrichtung zu erneuern. Da die Stromrichter eine Vielzahl von Modulen und den Modulen zugeordneten Kommunikationsverbindungen aufweisen und defekte Module und defekte Kommunikationsverbindungen oftmals visuell nicht als defekt zu erkennen sind, besteht die Gefahr, dass bei einer Wartung defekte Module und/oder defekte Kommunikationsverbindungen übersehen und daher nicht erneuert werden. In einem solchen Fall kann trotz erfolgter Wartung des Stromrichters dessen Verfügbarkeit eingeschränkt sein.

Das Dokument EP 2 458 726 A1 offenbart einen Stromrichter mit einer Vielzahl von Zellen. Bezüglich der Ansteuerung bilden die Zellen des Stromrichters eine Ringstruktur. Eine Steuereinrichtung sendet eine optische Nachricht an die erste Zelle des Rings. Die erste Zelle liest unter bestimmten Bedingungen Werte aus der Nachricht aus und schreibt neue Werte in die Nachricht ein. Danach wird die veränderte Nachricht an die zweite Zelle des Rings weitergeleitet, wo sich der Ablauf wiederholt. Die letzte Zelle des Rings sendet die Nachricht an die Steuereinrichtung zurück. Die Nachricht kann einen Paritätswert, eine Checksumme oder einen CRC-Code aufweisen.

Der Erfindung liegt die Aufgabe zugrunde, ein Verfahren und eine Anordnung anzugeben, mit denen Fehler eines Stromrichters zuverlässig erkannt und dokumentiert werden können.

Diese Aufgabe wird erfindungsgemäß gelöst durch ein Verfahren und durch eine Anordnung nach den unabhängigen Patentansprüchen. Vorteilhafte Ausführungsformen des Verfahrens und der Anordnung sind in den jeweiligen abhängigen Patentansprüchen angegeben.

Offenbart wird ein Verfahren zum Erzeugen eines Fehlerberichts über einen elektrischen Stromrichter, wobei der Stromrichter eine Vielzahl von gleichartigen Modulen aufweist, welche jeweils mindestens zwei elektronische Schaltelemente und einen elektrischen Energiespeicher aufweisen, wobei bei dem Verfahren
- eine Steuereinrichtung eine erste Nachricht an eines der Module absendet, die erste Nachricht über eine dem Modul zugeordnete Kommunikationsverbindung zu dem Modul übertragen wird und die erste Nachricht von dem Modul empfangen wird,
- das Modul eine zweite Nachricht an die Steuereinrichtung absendet, die zweite Nachricht über die dem Modul zugeordnete Kommunikationsverbindung zu der Steuereinrichtung übertragen wird und die zweite Nachricht von der Steuereinrichtung empfangen wird,
- bei dem Modul die empfangene erste Nachricht daraufhin überprüft wird, ob sie sich von der abgesendeten ersten Nachricht unterscheidet, und das Auftreten eines Fehlers erkannt wird, wenn sich die empfangene erste Nachricht von der abgesendeten ersten Nachricht unterscheidet und/oder bei der Steuereinrichtung die empfangene zweite Nachricht daraufhin überprüft wird, ob sie sich von der abgesendeten zweiten Nachricht unterscheidet, und das Auftreten eines Fehlers erkannt wird, wenn sich die empfangene zweite Nachricht von der abgesendeten zweiten Nachricht unterscheidet,
- bei Erkennen eines Fehlers Informationen über diesen Fehler in einer (zentralen) Überwachungseinrichtung gespeichert werden, und
- von der Überwachungseinrichtung ein Fehlerbericht erzeugt wird, der zumindest eine Teilmenge der in der Überwachungseinrichtung gespeicherten Informationen über während eines Überwachungszeitraums erkannte Fehler aufweist.

Hierbei ist besonders vorteilhaft, dass automatisch das Auftreten eines Fehlers erkannt wird, wenn (unerwünschte) Veränderungen der ersten Nachricht oder der zweiten Nachricht bei deren Übertragungen aufgetreten sind. Informationen über den erkannten Fehler werden daraufhin in der Überwachungseinrichtung gespeichert. Diese Informationen über den erkannten Fehler können beispielsweise die Kennung des Moduls, an dem der Fehler aufgetreten ist, oder die Kennung der Kommunikationsverbindung, an der der Fehler aufgetreten ist, aufweisen. Aus den in der Überwachungseinrichtung gespeicherten Informationen wird danach automatisch ein Fehlerbericht erzeugt, welcher die während des Überwachungszeitraums aufgetretenen Fehler beschreibt. Mittels eines derartigen Fehlerberichts wird das Risiko deutlich reduziert, dass bei einer nachfolgenden Wartung des Stromrichters defekte Module und/oder defekte Kommunikationsverbindungen übersehen werden.

Das Verfahren kann so ablaufen, dass mittels eines mit der ersten Nachricht übertragenen Prüfwerts, insbesondere eines CRC-Prüfwerts, überprüft wird, ob sich die bei dem Modul empfangene erste Nachricht von der abgesendeten ersten Nachricht unterscheidet.

Das Verfahren kann auch so ablaufen, dass mittels eines mit der zweiten Nachricht übertragenen Prüfwerts, insbesondere eines CRC-Prüfwerts, überprüft wird, ob sich die bei der Steuereinrichtung empfangene zweite Nachricht von der abgesendeten zweiten Nachricht unterscheidet. Mittels des Prüfwerts (der auch als Prüfsumme bzw. checksum bezeichnet wird) kann sicher und zuverlässig überprüft werden, ob Veränderungen bei der ersten Nachricht und/oder bei der zweiten Nachricht aufgetreten sind. Derartige ungewollte Veränderungen von Nachrichten sind nämlich ein Hinweis auf das Auftreten eines Fehlers bei dem Modul (beispielsweise bei einer Kommunikationseinheit des Moduls), bei der Steuereinrichtung und/oder bei der die Steuereinrichtung mit dem Modul verbindenden Kommunikationsverbindung.

Das Verfahren kann so ablaufen, dass zusätzlich das Auftreten eines Fehlers erkannt wird, wenn auf die von der Steuereinrichtung abgesendete erste Nachricht hin der Empfang der zweiten Nachricht bei der Steuereinrichtung ausbleibt (das heißt, wenn auf die von der Steuereinrichtung abgesendete erste Nachricht hin von der Steuereinrichtung keine zweite Nachricht empfangen wird). Hierbei wird vorteilhafterweise auch dann das Auftreten eines Fehlers erkannt, wenn ein Modul überhaupt nicht mehr auf die erste Nachricht antwortet, d. h. wenn das Modul auf die erste Nachricht hin überhaupt keine zweite Nachricht zurücksendet.

Das Verfahren kann so ablaufen, dass der Fehlerbericht Kennungen der von den Fehlern betroffenen Module und/oder Kennungen der von den Fehlern betroffenen Kommunikationsverbindungen aufweist. Derartige Kennungen können beispielsweise Nummern oder Zeichenketten sein, welche das jeweilige Modul und/oder die jeweilige Kommunikationsverbindung eindeutig kennzeichnen. Mit diesen Kennungen enthält der Fehlerbericht eindeutige Informationen darüber, welches Modul oder welche Kommunikationsverbindung defekt ist (beziehungsweise bei welchem Modul oder bei welcher Kommunikationsverbindung die Wahrscheinlichkeit eines Defekts erhöht ist). Diese Module und/oder Kommunikationsverbindungen können dann bei der nächsten Wartung ausgetauscht werden.

Das Verfahren kann auch so ablaufen, dass der Fehlerbericht Informationen über den Einbauort der von den Fehlern betroffenen Module in dem Stromrichter und/oder Informationen über den Einbauort der von den Fehlern betroffenen Kommunikationsverbindungen in dem Stromrichter aufweist. Die Informationen über den Einbauort in dem Stromrichter erleichtern vorteilhafterweise das Lokalisieren der defekten Module bzw. Kommunikationsverbindungen in dem Stromrichter, so dass diese (beispielsweise während einer nachfolgenden Wartung) schnell und zuverlässig gefunden werden können.

Das Verfahren kann so ablaufen, dass die in der Überwachungseinrichtung gespeicherten Informationen (vor Erzeugung des Fehlerberichts) in der Überwachungseinrichtung sortiert werden nach dem Einbauort der (von den Fehlern) betroffenen Module in dem Stromrichter (und dass der Fehlerbericht so erzeugt wird, dass der Fehlerbericht die sortierten Informationen enthält). Hierbei ist vorteilhaft, dass der Fehlerbericht die Informationen in sortierter Form enthält, und zwar in sortierter Form nach dem Einbauort der betroffenen Module in dem Stromrichter. Dies ermöglicht es beispielsweise, bei einer nachfolgenden Wartung die betroffenen defekten Module nacheinander schnell und zuverlässig zu finden.

Das Verfahren kann so ablaufen, dass der Fehlerbericht an einer (elektronischen) Ausgabeeinrichtung ausgegeben wird. Eine derartige Ausgabeeinrichtung kann beispielsweise ein Bildschirm oder eine Anzeige sein auf, denen die Informationen optisch ausgegeben werden.

Offenbart wird weiterhin eine Anordnung mit einem elektrischen Stromrichter
- mit einer Vielzahl von gleichartigen Modulen, welche jeweils mindestens zwei elektronische Schaltelemente und einen elektrischen Energiespeicher aufweisen,
- mit einer Steuereinrichtung, die ausgebildet ist zum Absenden einer ersten Nachricht an jeweils eines der Module, und
- mit einer den Modulen jeweils zugeordneten Kommunikationsverbindung zum Übertragen der ersten Nachricht zu dem jeweiligen Modul und zum Übertragen einer von dem jeweiligen Modul abgesendeten zweiten Nachricht zu der Steuereinrichtung,
- wobei die Module jeweils ausgebildet sind zum Empfängen der ersten Nachricht und zum Überprüfen, ob sich die empfangene erste Nachricht von der abgesendeten ersten Nachricht unterscheidet und/oder wobei die Steuereinrichtung ausgebildet ist zum Empfangen der zweiten Nachricht und zum Überprüfen, ob sich die empfangene zweite Nachricht von der abgesendeten zweiten Nachricht unterscheidet,
- wobei die Module jeweils ausgebildet sind zum Erkennen eines Auftretens eines Fehlers, wenn sich die jeweils empfangene erste Nachricht von der jeweils abgesendeten ersten Nachricht unterscheidet und/oder wobei die Steuereinrichtung ausgebildet ist zum Erkennen eines Auftretens eines Fehlers, wenn sich die empfangene zweite Nachricht von der abgesendeten zweiten Nachricht unterscheidet, und
   - mit einer (zentralen) Überwachungseinrichtung, die ausgebildet ist zum Speichern von Informationen über erkannte Fehler und zum Erzeugen eines Fehlerberichts, der zumindest eine Teilmenge der gespeicherten Informationen über während eines Überwachungszeitraums erkannte Fehler aufweist.

Diese Anordnung weist gleichartige Vorteile auf, wie sie oben im Zusammenhang mit dem Verfahren angegeben sind.

Im Folgenden wird die Erfindung anhand von Ausführungsbeispielen näher erläutert. Gleiche Bezugszeichen verweisen dabei auf gleiche oder gleich wirkende Elemente. Dazu ist in
- Figur 1: ein Ausführungsbeispiel eines Stromrichters, der eine Vielzahl von Modulen aufweist, in
- Figur 2: ein Ausführungsbeispiel eines Moduls, in
- Figur 3: ein weiteres Ausführungsbeispiel eines Moduls, in
- Figur 4: ein Ausführungsbeispiel des Stromrichters und einer Überwachungseinrichtung, und in
- Figur 5: ein beispielhafter Verfahrensablauf dargestellt.

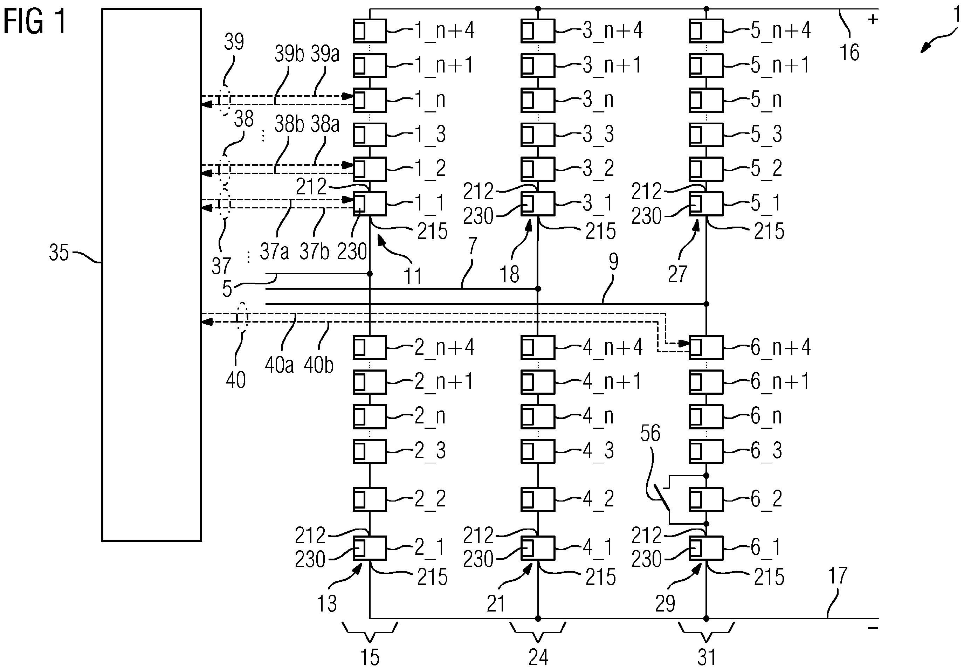

In Figur 1 ist ein Stromrichter 1 in Form eines modularen Multilevelstromrichters 1 (modular multilevel converter, MMC) dargestellt. Dieser Multilevelstromrichter 1 weist einen ersten Wechselspannungsanschluss 5, einen zweiten Wechselspannungsanschluss 7 und einen dritten Wechselspannungsanschluss 9 auf. Der erste Wechselspannungsanschluss 5 ist elektrisch mit einem ersten Phasenmodulzweig 11 und einem zweiten Phasenmodulzweig 13 verbunden. Der erste Phasenmodulzweig 11 und der zweite Phasenmodulzweig 13 bilden ein erstes Phasenmodul 15 des Stromrichters 1. Das dem ersten Wechselspannungsanschluss 5 abgewandte Ende des ersten Phasenmodulzweigs 11 ist mit einem ersten Gleichspannungsanschluss 16 elektrisch verbunden; das dem ersten Wechselspannungsanschluss 5 abgewandte Ende des zweiten Phasenmodulzweigs 13 ist mit einem zweiten Gleichspannungsanschluss 17 elektrisch verbunden. Der erste Gleichspannungsanschluss 16 ist ein positiver Gleichspannungsanschluss; der zweite Gleichspannungsanschluss 17 ist ein negativer Gleichspannungsanschluss.

Der zweite Wechselspannungsanschluss 7 ist mit einem Ende eines dritten Phasenmodulzweigs 18 und mit einem Ende eines vierten Phasenmodulzweigs 21 elektrisch verbunden. Der dritte Phasenmodulzweig 18 und der vierte Phasenmodulzweig 21 bilden ein zweites Phasenmodul 24. Der dritte Wechselspannungsanschluss 9 ist mit einem Ende eines fünften Phasenmodulzweigs 27 und mit einem Ende eines sechsten Phasenmodulzweigs 29 elektrisch verbunden. Der fünfte Phasenmodulzweig 27 und der sechste Phasenmodulzweig 29 bilden ein drittes Phasenmodul 31.

Das dem zweiten Wechselspannungsanschluss 7 abgewandte Ende des dritten Phasenmodulzweigs 18 und das dem dritten Wechselspannungsanschluss 9 abgewandte Ende des fünften Phasenmodulzweigs 27 sind mit dem ersten Gleichspannungsanschluss 16 elektrisch verbunden. Das dem zweiten Wechselspannungsanschluss 7 abgewandte Ende des vierten Phasenmodulzweigs 21 und das dem dritten Wechselspannungsanschluss 9 abgewandte Ende des sechsten Phasenmodulzweigs 29 sind mit dem zweiten Gleichspannungsanschluss 17 elektrisch verbunden.

Jeder Phasenmodulzweig weist eine Mehrzahl von Modulen (1_1, 1_2, 1_3 ... 1_n, 1_n+1, 1_n+2, 1_n+3, 1_n+4; 2_1 ... 2_n+4; usw.) auf, welche (mittels ihrer galvanischen Stromanschlüsse) elektrisch in Reihe geschaltet sind. Solche Module werden auch als Submodule bezeichnet. Im Ausführungsbeispiel der Figur 1 weist jeder Phasenmodulzweig (n+4) Module auf. Die Anzahl der (mittels ihrer galvanischen Stromanschlüsse) elektrisch in Reihe geschalteten Module kann sehr verschieden sein, mindestens sind drei Module in Reihe geschaltet, es können aber auch beispielsweise 50, 100 oder mehr Module elektrisch in Reihe geschaltet sein. Im Ausführungsbeispiel ist n = 36: der erste Phasenmodulzweig 11 weist also 36 Module 1_1, 1_2, 1_3, ... 1_36 und zusätzlich die Reserve-Module 1_n+1 = 1_37, 1_n+2 = 1_38, 1_n+3 = 1_39 und 1_n+4 = 1_40 auf. Von den 40 Modulen werden also 36 Module zum Betrieb des Stromrichters benötigt (36 Betriebs-Module), und 4 Module (die Module 1_37 bis 1_40) sind Reserve-Module. Die anderen Phasenmodulzweige 13, 18, 21, 27 und 29 sind gleichartig aufgebaut.

Im linken Bereich der Figur 1 ist schematisch eine Steuereinrichtung 35 (Control-System 35) für die Module 1_1 bis 6_n+4 dargestellt. Von dieser zentralen Steuereinrichtung 35 werden Nachrichten über Kommunikationsverbindungen zu den einzelnen Modulen übertragen. Die Nachrichtenübertragung zwischen der Steuereinrichtung 35 und einem Modul ist jeweils symbolhaft durch zwei gestrichelte Linien dargestellt; die Richtung der Nachrichtenübertragung ist durch die Pfeilspitze an den gestrichelten Linien symbolisiert. Dies ist am Beispiel der Module 1_1, 1_2, 1_n und 6_n+4 dargestellt; zu den anderen Modulen bestehen gleichartige Kommunikationsverbindungen und es werden auf die gleiche Art und Weise Nachrichten zu den anderen Modulen gesendet beziehungsweise von den anderen Modulen empfangen.

Eine erste Kommunikationsverbindung 37 verbindet die Steuereinrichtung 35 mit dem Modul 1_1. Diese erste Kommunikationsverbindung 37 weist einen ersten Hin-Kommunikationspfad 37a und einen ersten Rück-Kommunikationspfad 37b auf. Die erste Kommunikationsverbindung 37 ist beispielsweise als eine Lichtwellenleiter-Kommunikationsverbindung 37 ausgestaltet; der erste Hin-Kommunikationspfad 37a ist ein Lichtwellenleiter 37a und der erste Rück-Kommunikationspfad 37b ist ein weiterer Lichtwellenleiter 37b. Die über die Kommunikationsverbindung 37 zu und von dem Modul 1_1 übertragenen Nachrichten sind in diesem Beispiel optische Nachrichten. In gleicher Weise verbindet eine zweite Kommunikationsverbindung 38 die Steuereinrichtung 35 mit dem Modul 1 2. Ebenso verbindet eine n-te Kommunikationsverbindung 39 die Steuereinrichtung 35 mit dem Modul 1_n. Eine weitere Kommunikationsverbindung 40 verbindet die Steuereinrichtung 35 mit dem Modul 6_n+4 usw.

Jedem Modul ist ein Überbrückungsschalter zugeordnet, der das Modul (bei einem Defekt des Moduls) überbrücken (kurzschliessen) kann. Ein solcher Überbrückungsschalter 56 ist aus Gründen der Übersichtlichkeit nur bei dem Modul 6_2 dargestellt. Allen anderen Modulen ist ebenfalls ein derartiger Überbrückungsschalter zugeordnet. Der Überbrückungsschalter 56 wird bei Auftreten eines Defekts an dem Modul 6_2 von einer modulinternen Überbrückungsschalter-Ansteuereinrichtung geschlossen.

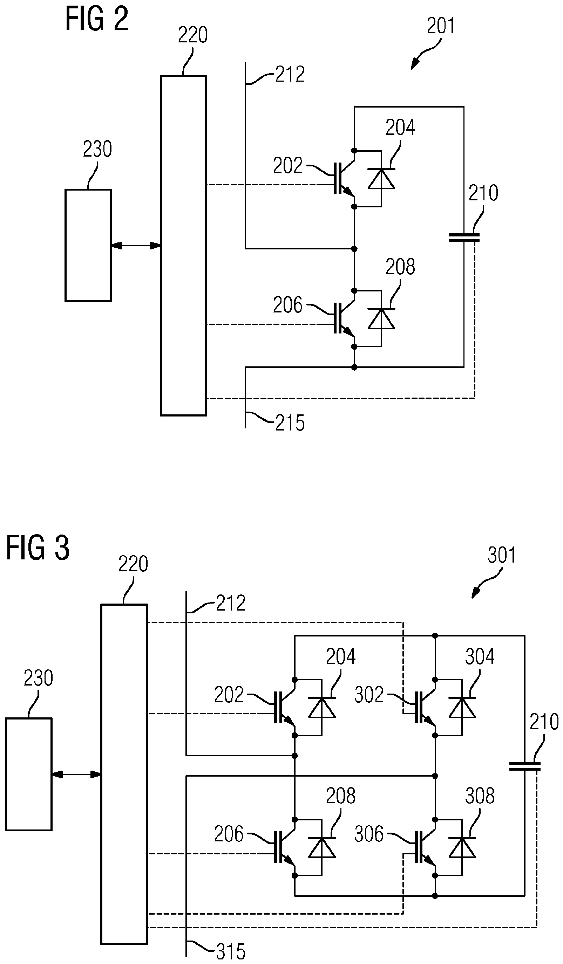

In Figur 2 ist beispielhaft der prinzipielle Aufbau eines Moduls 201 dargestellt. Dabei kann es sich beispielsweise um das Modul 1_1 des ersten Phasenmodulzweigs 11 (oder auch um eines der anderen in Figur 1 dargestellten Module) handeln. Das Modul ist als ein Halbbrückenmodul 201 ausgestaltet. Das Modul 201 weist ein erstes abschaltbares Halbleiterventil 202 mit einer ersten antiparallel geschalteten Diode 204 auf. Weiterhin weist das Modul 201 ein zweites abschaltbares Halbleiterventil 206 mit einer zweiten antiparallel geschalteten Diode 208 sowie einen elektrischen Energiespeicher 210 in Form eines Kondensators 210 auf. Das erste abschaltbare Halbleiterventil 202 ist ein erstes elektronisches Schaltelement 202; das zweite abschaltbare Halbleiterventil 206 ist ein zweites elektronisches Schaltelement 206. Das erste abschaltbare Halbleiterventil 202 und das zweite abschaltbare Halbleiterventil 206 sind jeweils als ein IGBT (insulated-gate bipolar transistor) ausgestaltet. Das erste abschaltbare Halbleiterventil 202 ist elektrisch in Reihe geschaltet mit dem zweiten abschaltbaren Halbleiterventil 206. Am Verbindungspunkt zwischen den beiden Halbleiterventilen 202 und 206 ist ein erster galvanischer Modulanschluss 212 angeordnet. An dem Anschluss des zweiten Halbleiterventils 206, welcher dem Verbindungspunkt gegenüberliegt, ist ein zweiter galvanischer Modulanschluss 215 angeordnet. Der zweite Modulanschluss 215 ist weiterhin mit einem ersten Anschluss des Energiespeichers 210 verbunden; ein zweiter Anschluss des Energiespeichers 210 ist elektrisch verbunden mit dem Anschluss des ersten Halbleiterventils 202, der dem Verbindungspunkt gegenüberliegt.

Der Energiespeicher 210 ist also elektrisch parallel geschaltet zu der Reihenschaltung aus dem ersten Halbleiterventil 202 und dem zweiten Halbleiterventil 206. Durch entsprechende Ansteuerung des ersten Halbleiterventils 202 und des zweiten Halbleiterventils 206 durch eine modulinterne elektronische Ansteuerschaltung 220 kann erreicht werden, dass zwischen dem ersten galvanischen Modulanschluss 212 und dem zweiten galvanischen Modulanschluss 215 entweder die Spannung des Energiespeichers 210 ausgegeben wird oder keine Spannung ausgegeben wird (das heißt eine Nullspannung ausgegeben wird). Durch Zusammenwirken der Module der einzelnen Phasenmodulzweige kann so die jeweils gewünschte Ausgangsspannung des Stromrichters erzeugt werden.

Zur modulexternen Kommunikation weist das Modul 201 eine Kommunikationseinheit 230 auf, die elektrisch mit der Ansteuerschaltung 220 verbunden ist. An die Kommunikationseinheit 230 ist zur modulexternen Kommunikation eine Kommunikationsverbindung, zum Beispiel Lichtwellenleiter, angeschlossen. Weiterhin kann die Ansteuerschaltung 220 auch Zustände des Moduls erfassen und an die zentrale Steuereinrichtung 35 melden. In Figur 2 ist beispielhaft mittels einer gestrichelten Linie angedeutet, dass die Ansteuerschaltung 220 den Ladezustand des Energiespeichers 210 erfasst und an die zentrale Steuereinrichtung 35 melden kann.

In Figur 3 ist ein weiteres Ausführungsbeispiel eines Moduls 301 dargestellt. Bei diesem Modul 301 kann es sich beispielsweise um das Modul 1_n (oder auch um eines der anderen in Figur 1 dargestellten Module) handeln. Neben dem bereits aus Figur 2 bekannten ersten Halbleiterventil 202, zweiten Halbleiterventil 206, erster Diode 204, zweiter Diode 208, Energiespeicher 210, Ansteuerschaltung 220 und Kommunikationseinheit 230 weist das in Figur 3 dargestellte Modul 301 ein drittes abschaltbares Halbleiterventil 302 mit einer antiparallel geschalteten dritten Diode 304 sowie ein viertes abschaltbares Halbleiterventil 306 mit einer vierten antiparallel geschalteten Diode 308 auf. Das dritte abschaltbare Halbleiterventil 302 ist ein drittes elektronisches Schaltelement 302; das vierte abschaltbare Halbleiterventil 306 ist ein viertes elektronisches Schaltelement 306. Das dritte abschaltbare Halbleiterventil 302 und das vierte abschaltbare Halbleiterventil 306 sind jeweils als ein IGBT ausgestaltet. Im Unterschied zur Schaltung der Figur 2 ist der zweite galvanische Modulanschluss 315 nicht mit dem zweiten Halbleiterventil 206 elektrisch verbunden, sondern mit einem Mittelpunkt einer elektrischen Reihenschaltung aus dem dritten Halbleiterventil 302 und dem vierten Halbleiterventil 306.

Das Modul 301 der Figur 3 ist ein sogenanntes Vollbrückenmodul 301. Dieses Vollbrückenmodul 301 zeichnet sich dadurch aus, dass bei entsprechender Ansteuerung der vier Halbleiterventile zwischen dem ersten galvanischen Modulanschluss 212 und dem zweiten galvanischen Modulanschluss 315 wahlweise entweder die positive Spannung des Energiespeichers 210, die negative Spannung des Energiespeichers 210 oder eine Spannung des Wertes Null (Nullspannung) ausgegeben werden kann. Somit kann also mittels des Vollbrückenmoduls 301 die Polarität der Ausgangsspannung umgekehrt werden. Der Stromrichter 1 kann entweder nur Halbbrückenmodule 201, nur Vollbrückenmodule 301 oder auch Halbbrückenmodule 201 und Vollbrückenmodule 301 aufweisen.

Die Darstellungen der Figuren 2 und 3 zeigen jeweils ein Modul mit dem ersten galvanischen Modulanschluss 212 und dem zweiten galvanischen Modulanschluss 215 beziehungsweise 315. Über den ersten galvanischen Modulanschluss 212 und den zweiten galvanischen Modulanschluss 215, 315 fließen große elektrische Ströme des Stromrichters. Zusätzlich weist jedes Modul die Ansteuerschaltung 220 auf, die insbesondere die Schaltelemente 202, 206, 302 und/oder 306 ansteuert. Diese Ansteuerschaltung 220 ist mit der Kommunikationseinheit 230 elektrisch verbunden. Die Kommunikationseinheit 230 kommuniziert mittels der Kommunikationsverbindung (z.B. mittels Lichtwellenleitern) potentialgetrennt mit der Steuereinrichtung 35, vgl. Figur 1.

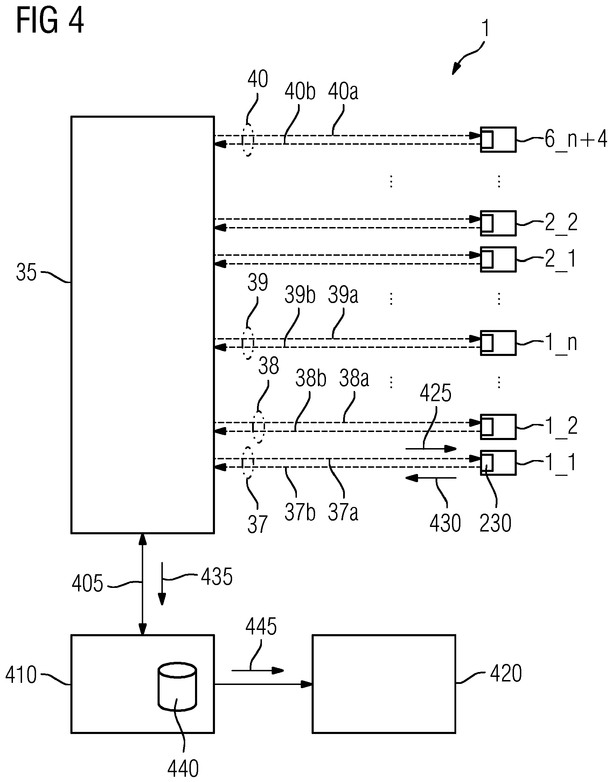

In Figur 4 sind von dem aus Figur 1 bekannten Multilevelstromrichter 1 lediglich die zentrale Steuereinrichtung 35 sowie einige beispielhafte Module (hier: die Module 1_1, 1_2, 1_n, 2_1, 2_2 und 6_n+4) dargestellt. Alle weiteren Module des Multilevelstromrichters 1 sind gleichartig über Kommunikationsverbindungen mit der Steuereinrichtung 35 verbunden. Im Unterschied zur Darstellung der Figur 1 sind in Figur 4 die leistungsführenden galvanischen Anschlüsse 212, 215 der Module nicht dargestellt; es ist in Figur 4 lediglich die Kommunikationseinheit 230 der einzelnen Module dargestellt.

Die Steuereinrichtung 35 ist mittels einer Datenverbindung 405 mit einer Überwachungseinrichtung 410 (Monitoring-System 410) verbunden. Über die Datenverbindung 405 erhält die Überwachungseinrichtung 410 Nachrichten mit Informationen über das Auftreten eines Fehlers bei einem Modul oder bei einer Kommunikationsverbindung des Stromrichters (insbesondere Informationen über den fehlerbedingten Ausfall eines Moduls oder einer Kommunikationsverbindung). Die Überwachungseinrichtung 410 speichert die mit den Nachrichten übertragenen Informationen über den Fehler (Fehlerinformationen), um diese Informationen später, ggf. mehrfach, auswerten zu können. Weiterhin sind in der Überwachungseinrichtung 410 Informationen über den Einbauort der Module 1_1 bis 6_n+4 in dem Stromrichter 1 und optional zusätzlich Informationen über den Einbauort der diesen Modulen zugeordneten Kommunikationsverbindungen gespeichert.

Die Überwachungseinrichtung 410 kann beispielsweise als ein Industrierechner oder als ein PC ausgestaltet sein. Die Überwachungseinrichtung 410 ist mit einer elektronischen Ausgabeeinrichtung 420 (beispielsweise mit einem Monitor 420 oder einer Anzeige 420) verbunden.

Zum Betrieb des Stromrichters 1 werden in jedem Phasenmodulzweig n funktionsfähige Module benötigt. Wenn sich der Stromrichter 1 im Ursprungszustand (Auslieferungszustand) befindet (das heißt, wenn keine defekten Module vorliegen), dann sind zum Betrieb des Stromrichters im ersten Phasenmodulzweig 11 die n Module 1_1 bis 1_n zum Betrieb ausreichend (Betriebs-Module). Die 4 Module 1_n+1 bis 1_n+4 sind Reserve-Module; sie werden zunächst nicht für den Betrieb des Stromrichters 1 benötigt und sind daher überzählig (redundant). Zu diesem Zeitpunkt sind noch keine Fehler aufgetreten, daher sind in der Überwachungseinrichtung 410 keine Informationen über Fehler (Fehlerinformationen) gespeichert. Wenn nach längerer Betriebszeit des Stromrichters 1 beispielsweise bei dem Modul 1_3 ein Fehler auftritt, dann wird das Modul 1_3 mittels seines Überbrückungsschalters elektrisch überbrückt; anstelle des defekten Moduls 1_3 wird eines der Reserve-Module zum Betrieb des Stromrichters verwendet. Auf diese Weise ist sichergestellt, dass auch bei Ausfall einzelner Module weiterhin ausreichend funktionsfähige Module vorhanden sind, um den Stromrichter weiter betreiben zu können.

Im Folgenden wird ein beispielhafter Verfahrensablauf zum Erzeugen eines Fehlerberichts über den Stromrichter 1 dargestellt. Die Steuereinrichtung 35 erzeugt eine erste Nachricht 425, die für das Modul 1_1 bestimmte Informationen (beispielsweise Ansteuerinformationen für die elektronischen Schaltelemente 202 und 206 des Moduls 1_1) enthält. Danach berechnet die Steuereinrichtung 35 einen ersten Prüfwert in Form eines CRC-Prüfwerts für die erste Nachricht 425. Der erste Prüfwert wird bei der Übertragung der ersten Nachricht 425 mit der ersten Nachricht 425 mitübertragen. Mittels dieses ersten Prüfwerts kann der Empfänger der Nachricht überprüfen, ob die Nachricht seit ihrer Erzeugung verändert worden ist. CRC steht für cyclic redundancy check (zyklische Redundanzprüfung) und ist als solches bekannt, so dass die Erzeugung und Auswertung von CRC-Prüfwerten hier nicht näher erläutert wird.

Die Steuereinrichtung 35 sendet die erste Nachricht 425 über die erste Kommunikationsverbindung 37 zu dem Modul 1 1 ab.

Die erste Nachricht 425 wird über den ersten Hin-Kommunikationspfad 37a der ersten Kommunikationsverbindung 37 zu der Kommunikationseinheit 230 des Moduls 1_1 übertragen.

Die Kommunikationseinheit 230 des Moduls 1_1 überprüft mittels des (mit der ersten Nachricht 425 übertragenen) ersten Prüfwerts, ob die erste Nachricht während der Übertragung verändert worden ist (ob sich also die bei dem Modul 1_1 empfangene erste Nachricht von der bei der Steuereinrichtung 35 abgesendeten ersten Nachricht unterscheidet). Wenn sich die empfangene erste Nachricht nicht von der abgesendeten ersten Nachricht unterscheidet (wenn also die empfangene erste Nachricht mit der abgesendeten ersten Nachricht übereinstimmt), dann liegt kein Fehler vor und es brauchen keine diesbezüglichen Aktionen durchgeführt zu werden. Wenn sich jedoch die bei dem Modul empfangene erste Nachricht von der abgesendeten ersten Nachricht unterscheidet und die Kommunikationseinheit 230 dies aufgrund des ersten Prüfwerts feststellt, dann erkennt die Kommunikationseinheit 230 das Auftreten eines Fehlers. Dieser Fehler kann zum Beispiel ein Defekt der Kommunikationsverbindung 37 sein.

Im Beispiel sei angenommen, dass sich die von dem Modul 1_1 empfangene erste Nachricht nicht von der bei der Steuereinrichtung 35 abgesendeten ersten Nachricht unterscheidet; es wird also kein Auftreten eines Fehlers erkannt. Daraufhin führt das Modul gemäß den in der ersten Nachricht enthaltenen Ansteuerinformationen eine entsprechende Ansteuerung der Schaltelemente 202 und 206 aus. Daraufhin erzeugt die Kommunikationseinheit 230 eine zweite Nachricht 430, die Informationen über den ordnungsgemäßen Betrieb des Moduls 1_1 enthält. Diese zweite Nachricht 430 enthält keine Informationen über einen Fehler, weil von der Kommunikationseinheit 230 kein Fehler erkannt worden ist. Die zweite Nachricht kann auch der ersten Nachricht entsprechen.

Die Kommunikationseinheit 230 berechnet einen zweiten Prüfwert in Form eines CRC-Prüfwerts für die zweite Nachricht 430. Daraufhin sendet die Kommunikationseinheit 230 die zweite Nachricht 430 über den ersten Rück-Kommunikationspfad 37b der ersten Kommunikationsverbindung 37 an die Steuereinrichtung 35. Der zweite Prüfwert wird mit der zweiten Nachricht 430 mitübertragen. Mittels dieses zweiten Prüfwerts kann der Empfänger der Nachricht überprüfen, ob die Nachricht bei der Übertragung verändert worden ist.

Die Steuereinrichtung 35 empfängt die zweite Nachricht 430 und überprüft mittels des zweiten Prüfwerts, ob die zweite Nachricht während der Übertragung über die erste Kommunikationsverbindung 37 verändert worden ist. Im Ausführungsbeispiel stellt die Steuereinrichtung fest, dass sich die empfangene zweite Nachricht 430 von der abgesendeten zweiten Nachricht 430 unterscheidet und erkennt das Vorliegen eines Fehlers. Der Fehler kann zum Beispiel ein Defekt der ersten Kommunikationsverbindung 37 sein oder auch ein Defekt in der Kommunikationseinheit 230 des Moduls 1_1. Daraufhin sendet die Steuereinrichtung 35 Informationen 435 über diesen Fehler (Fehlerinformationen) an die Überwachungseinrichtung 410. In der Überwachungseinrichtung 410 werden die Informationen 435 über den erkannten Fehler in einem Speicher 440 gespeichert.

In einem anderen Ausführungsbeispiel sei angenommen, dass die von dem Modul 1_1 empfangene erste Nachricht 425 sich von der bei der Steuereinrichtung 35 abgesendeten ersten Nachricht 425 unterscheidet. Die Kommunikationseinheit 230 wertet den mit der ersten Nachricht 425 übertragenen ersten Prüfwert aus und erkennt den Unterschied zwischen der empfangenen ersten Nachricht 425 und der abgesendeten ersten Nachricht 425. Die Kommunikationseinheit 230 des Moduls 1_1 erkennt also das Vorliegen eines Fehlers. Daraufhin sendet die Kommunikationseinheit 230 (zum Beispiel mit der zweiten Nachricht 430) Informationen über den aufgetretenen Fehler an die Steuereinrichtung 35. Die Steuereinrichtung 35 sendet diese Informationen an die Überwachungseinrichtung 410 weiter, wo die Informationen in dem Speicher 440 gespeichert werden.

In einem anderen beispielhaften Verfahrensablauf erkennt die Steuereinrichtung 35 (zusätzlich) auch dann das Auftreten eines Fehlers, wenn auf die von der Steuereinrichtung 35 abgesendete erste Nachricht 425 hin das Modul 1_1 nicht mit einer zweiten Nachricht antwortet. Mit anderen Worten sendet die Steuereinrichtung 35 zwar die erste Nachricht 425 an das Modul 1_1 ab, das Modul 1_1 sendet aber daraufhin keine zweite Nachricht 430 (Antwortnachricht) an die Steuereinrichtung 35 ab. Daraufhin erkennt die Steuereinrichtung 35 das Auftreten eines Fehlers: Entweder ist das Modul 1_1 defekt (weil es nicht auf die erste Nachricht antwortet) oder die erste Kommunikationsverbindung 37 ist defekt. Daraufhin sendet die Steuereinrichtung 35 Informationen über diesen Fehler an die Überwachungseinrichtung 410. Dort werden diese Informationen in dem Speicher 440 abgespeichert.

Diese Verfahrensschritte wiederholen sich entsprechend bei jeder Übertragung einer Nachricht von der Steuereinrichtung 35 zu einem Modul oder von einem Modul zu der Steuereinrichtung 35. So werden im Laufe der Zeit Informationen über die bei dem Stromrichter 1 aufgetretenen Fehler in der Überwachungseinrichtung 410 in dem Speicher 440 gespeichert. Zum Zeitpunkt der Erstellung eines Fehlerberichts werden von der Überwachungseinrichtung 410 aus dem Speicher 440 diejenigen Informationen ausgelesen, die Fehler betreffen, die während eines (vorgewählten) Überwachungszeitraums erkannt worden sind. Ein solcher Überwachungszeitraum kann beispielsweise der Zeitraum sein, der seit der letzten Wartung des Stromrichters vergangen ist. Ein solcher Überwachungszeitraum kann beispielsweise die vergangenen zwölf Monate umfassen.

Eine Kennung der von den Fehlern betroffenen Module oder Kommunikationsverbindungen kann von der Steuereinrichtung 35 mit den Informationen über den Fehler 435 zu der Überwachungseinrichtung 410 übertragen werden. Optional kann aber auch die Überwachungseinrichtung 410 die Fehlerinformationen um eine solche Kennung der von den Fehlern betroffenen Module oder Kommunikationsverbindungen ergänzen (wobei die Kennung in der Überwachungseinrichtung 410 gespeichert war und bei der Ergänzung den jeweiligen Fehlerinformationen zugeordnet wird). Optional ergänzt die Überwachungseinrichtung 410 die Fehlerinformationen um Informationen über den Einbauort der von den Fehlern betroffenen Module oder Kommunikationsverbindungen.

Unter Nutzung der in der Überwachungseinrichtung 410 gespeicherten Informationen über aufgetretene Fehler (Fehlerinformationen 435) wird ein Fehlerbericht 445 erzeugt. Der von der Überwachungseinrichtung 410 automatisch erzeugte Fehlerbericht 445 wird für den Überwachungszeitraum erstellt. Dieser Fehlerbericht 445 listet die während des Überwachungszeitraums erkannten Fehler auf. Beispielsweise weist der Fehlerbericht für jeden erkannten Fehler eine Kennung des von dem Fehler betroffenen Moduls, eine Kennung der von dem Fehler betroffenen Kommunikationsverbindung, den Einbauort des Moduls, den Einbauort der Kommunikationsverbindung und/oder nähere Information über die Art des Fehlers auf.

Der von der Überwachungseinrichtung 410 erzeugte Fehlerbericht 445 wird zu der Ausgabeeinrichtung 420 übertragen und danach von der Ausgabeeinrichtung 420 ausgegeben. Bei dieser Ausgabeeinrichtung 420 kann es sich beispielsweise um einen Computermonitor 420, um ein Display 420 eines tragbaren Rechners oder um einen Drucker 420 handeln.

Optional können vor der Erstellung des Fehlerberichts die für den Fehlerbericht vorgesehenen Informationen von der Überwachungseinrichtung 410 sortiert werden, wobei diese Sortierung nach dem Einbauort der von den Fehlern betroffenen Module und/oder Kommunikationsverbindungen im Stromrichter erfolgt. Der Fehlerbericht enthält dann die Informationen in sortierter Form, das heißt die Informationen des Fehlerberichts sind nach dem Einbauort der betroffenen Module oder Kommunikationsverbindungen des Stromrichters sortiert. Diese Form der Ausgabe des Fehlerberichts ermöglicht eine besonders schnelle Durchführung der Wartung des Stromrichters, da die betroffenen Module oder Kommunikationsverbindungen der Reihe nach entsprechend ihres Einbauortes in dem Stromrichter ersetzt werden können.

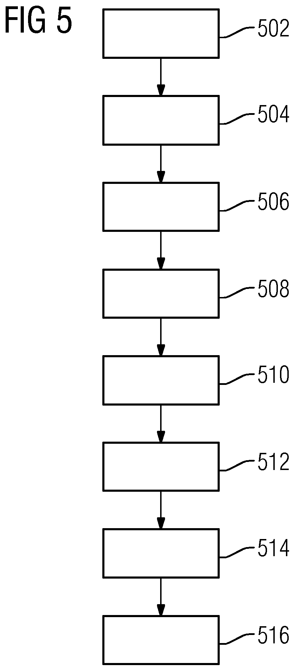

In Figur 5 ist der Ablauf des Verfahrens zum Erzeugen eines Fehlerberichts noch einmal beispielhaft zusammengefasst dargestellt.

Verfahrensschritt 502: Überprüfen, mittels des Prüfwerts, ob sich eine empfangene Nachricht von einer abgesendeten Nachricht unterscheidet.

Verfahrensschritt 504: Erkennen des Auftretens eines Fehlers, wenn sich die empfangene Nachricht von der abgesandten Nachricht unterscheidet.

Verfahrensschritt 506: Erkennen des Auftretens eines Fehlers, wenn auf eine an ein Modul abgesendete (erste) Nachricht hin keine (zweite) Nachricht bei der Steuereinrichtung eintrifft (optional).

Verfahrensschritt 508: Bei Erkennen eines Fehlers Speichern von Informationen über diesen Fehler (Fehlerinformationen) in der Überwachungseinrichtung.

Verfahrensschritt 510: Ergänzen der gespeicherten Informationen um Informationen über den Einbauort der von den Fehlern betroffenen Module oder Kommunikationsverbindungen (optional) .

Verfahrensschritt 512: Sortieren der gespeicherten Informationen nach dem Einbauort der von den Fehlern betroffenen Module und/oder Kommunikationsverbindungen (optional).

Verfahrensschritt 514: Erzeugen eines Fehlerberichts, der zumindest eine Teilmenge der in der Überwachungseinrichtung gespeicherten Informationen über die erkannten Fehler aufweist.

Verfahrensschritt 516: Ausgeben des Fehlerberichts an der Ausgabeeinrichtung.

Es wurde ein Verfahren beschrieben, bei dem die Kommunikationsverbindungen zwischen der Steuereinrichtung und den Modulen in jeder Kommunikationsrichtung überwacht werden. Dabei werden die Anzahl von auftretenden CRC-Fehlern sowie auftretende Totalausfälle der Kommunikationsverbindung oder eines Moduls festgestellt und Informationen über solche auftretenden Fehler an die Überwachungseinrichtung 410 übergeben. Die Überwachungseinrichtung 410 ergänzt diese Informationen über den Fehler mit Informationen über den Einbauort und/oder eine Kennung (zum Beispiel eine Seriennummer) der Module oder Kommunikationsverbindungen und erzeugt automatisch einen Fehlerbericht (Fehlerliste), welcher eine Zusammenstellung der Informationen über die aufgetretenen Fehler beinhaltet. Dieser Fehlerbericht kann vorteilhafterweise bei der nächsten Wartung des Stromrichters verwendet werden. Dadurch lässt sich die Wartung des Stromrichters wesentlich vereinfachen und die für die Wartung benötigte Zeit erheblich reduzieren. Mithilfe dieses Verfahrens können alle in dem Stromrichter auftretenden Fehler erkannt werden, daher kann nach der Wartung die volle Verfügbarkeit des Stromrichters gewährleistet werden.

## Patentansprüche

1. Verfahren zum Erzeugen eines Fehlerberichts über einen elektrischen Stromrichter, wobei der Stromrichter (1) eine Vielzahl von gleichartigen Modulen (1_1, 1_2, 1_3) aufweist, welche jeweils mindestens zwei elektronische Schaltelemente (202, 206) und einen elektrischen Energiespeicher (210) aufweisen, wobei bei dem Verfahren
- eine Steuereinrichtung (35) eine erste Nachricht (425) an eines der Module (1_1) absendet, die erste Nachricht (425) über eine dem Modul (1_1) zugeordnete Kommunikationsverbindung (37) zu dem Modul (1_1) übertragen wird und die erste Nachricht (425) von dem Modul (1_1) empfangen wird,
- das Modul (1_1) eine zweite Nachricht (430) an die Steuereinrichtung (35) absendet, die zweite Nachricht (430) über die dem Modul (1_1) zugeordnete Kommunikationsverbindung (37) zu der Steuereinrichtung (35) übertragen wird und die zweite Nachricht (430) von der Steuereinrichtung (35) empfangen wird,
- bei dem Modul (1_1) die empfangene erste Nachricht (425) daraufhin überprüft (502) wird, ob sie sich von der abgesendeten ersten Nachricht unterscheidet, und das Auftreten eines Fehlers erkannt wird, wenn sich die empfangene erste Nachricht (425) von der abgesendeten ersten Nachricht unterscheidet und/oder bei der Steuereinrichtung (35) die empfangene zweite Nachricht (430) daraufhin überprüft (502) wird, ob sie sich von der abgesendeten zweiten Nachricht unterscheidet, und das Auftreten eines Fehlers erkannt wird, wenn sich die empfangene zweite Nachricht (430) von der abgesendeten zweiten Nachricht unterscheidet,
- bei Erkennen eines Fehlers Informationen (435) über diesen Fehler in einer Überwachungseinrichtung (410) gespeichert (508) werden, und
- von der Überwachungseinrichtung (410) ein Fehlerbericht (445) erzeugt (514) wird, der zumindest eine Teilmenge der in der Überwachungseinrichtung (410) gespeicherten Informationen über während eines Überwachungszeitraums erkannte Fehler aufweist.

2. Verfahren nach Anspruch 1,
**dadurch gekennzeichnet, dass**
- mittels eines mit der ersten Nachricht (425) übertragenen Prüfwerts überprüft (502) wird, ob sich die bei dem Modul (1_1) empfangene erste Nachricht (425) von der abgesendeten ersten Nachricht unterscheidet.

3. Verfahren nach Anspruch 1 oder 2,
**dadurch gekennzeichnet, dass**
- mittels eines mit der zweiten Nachricht (430) übertragenen Prüfwerts überprüft (502) wird, ob sich die bei der Steuereinrichtung (35) empfangene zweite Nachricht (430) von der abgesendeten zweiten Nachricht unterscheidet.

4. Verfahren nach einem der vorhergehenden Ansprüche,
**dadurch gekennzeichnet, dass**
- zusätzlich das Auftreten eines Fehlers erkannt wird (506), wenn auf die von der Steuereinrichtung (35) abgesendete erste Nachricht (425) hin der Empfang der zweiten Nachricht (430) bei der Steuereinrichtung (35) ausbleibt.

5. Verfahren nach einem der vorhergehenden Ansprüche,
**dadurch gekennzeichnet, dass**
- der Fehlerbericht (445) Kennungen der von den Fehlern betroffenen Module (1_1) und/oder Kennungen der von den Fehlern betroffenen Kommunikationsverbindungen (37) aufweist.

6. Verfahren nach einem der vorhergehenden Ansprüche,
**dadurch gekennzeichnet, dass**
- der Fehlerbericht (445) Informationen über den Einbauort der von den Fehlern betroffenen Module (1_1) in dem Stromrichter (1) und/oder Informationen über den Einbauort der von den Fehlern betroffenen Kommunikationsverbindungen (37) in dem Stromrichter (1) aufweist.

7. Verfahren nach einem der vorhergehenden Ansprüche,
**dadurch gekennzeichnet, dass**
- die in der Überwachungseinrichtung (410) gespeicherten Informationen (435) in der Überwachungseinrichtung (410) sortiert werden nach dem Einbauort der betroffenen Module in dem Stromrichter (1).

8. Verfahren nach einem der vorhergehenden Ansprüche,
**dadurch gekennzeichnet, dass**
- der Fehlerbericht (445) an einer Ausgabeeinrichtung (420) ausgegeben wird.

9. Anordnung
- mit einem elektrischen Stromrichter (1)
- mit einer Vielzahl von gleichartigen Modulen (1_1, 1_2, 1_3), welche jeweils mindestens zwei elektronische Schaltelemente (202, 206) und einen elektrischen Energiespeicher (210) aufweisen,
- mit einer Steuereinrichtung (35), die ausgebildet ist zum Absenden einer ersten Nachricht (425) an jeweils eines der Module (1_1), und
- mit einer den Modulen (1_1, 1_2) jeweils zugeordneten Kommunikationsverbindung (37, 38) zum Übertragen der ersten Nachricht (425) zu dem jeweiligen Modul (1_1) und zum Übertragen einer von dem jeweiligen Modul (1_1) abgesendeten zweiten Nachricht (430) zu der Steuereinrichtung (35),
- wobei die Module (1_1) jeweils ausgebildet sind zum Empfangen der ersten Nachricht (425) und zum Überprüfen, ob sich die empfangene erste Nachricht (425) von der abgesendeten ersten Nachricht unterscheidet und/oder wobei die Steuereinrichtung (35) ausgebildet ist zum Empfangen der zweiten Nachricht (430) und zum Überprüfen, ob sich die empfangene zweite Nachricht (430) von der abgesendeten zweiten Nachricht unterscheidet,
- wobei die Module (1_1) jeweils ausgebildet sind zum Erkennen eines Auftretens eines Fehlers, wenn sich die jeweils empfangene erste Nachricht (425) von der jeweils abgesendeten ersten Nachricht unterscheidet und/oder wobei die Steuereinrichtung (35) ausgebildet ist zum Erkennen eines Auftretens eines Fehlers, wenn sich die empfangene zweite Nachricht (430) von der abgesendeten zweiten Nachricht unterscheidet, und
- mit einer Überwachungseinrichtung (410), die ausgebildet ist zum Speichern (508) von Informationen (435) über erkannte Fehler und zum Erzeugen (514) eines Fehlerberichts (445), der zumindest eine Teilmenge der gespeicherten Informationen über während eines Überwachungszeitraums erkannte Fehler aufweist.

## Claims

1. Method for producing an error report relating to an electrical power converter, wherein the power converter (1) has a plurality of modules (1_1, 1_2, 1_3) of the same type which each have at least two electronic switching elements (202, 206) and an electrical energy store (210), wherein, in the method
- a control device (35) sends a first message (425) to one of the modules (1_1), the first message (425) is transmitted to the module (1_1) via a communication connection (37) associated with the module (1_1) and the first message (425) is received by the module (1_1),
- the module (1_1) sends a second message (430) to the control device (35), the second message (430) is transmitted to the control device (35) via the communication connection (37) associated with the module (1_1) and the second message (430) is received by the control device (35),
- in the module (1_1), the received first message (425) is checked (502) for whether it differs from the sent first message, and the occurrence of an error is detected when the received first message (425) differs from the sent first message, and/or in the control device (35), the received second message (430) is checked (502) for whether it differs from the sent second message, and the occurrence of an error is detected when the received second message (430) differs from the sent second message,
- when an error is detected, information (435) relating to this error is stored (508) in a monitoring device (410), and
- the monitoring device (410) produces (514) an error report (445) containing at least a subset of the information that is stored in the monitoring device (410) and relates to errors detected during a monitoring period.

2. Method according to Claim 1,
**characterized in that**
- a check value transmitted with the first message (425) is used to check (502) whether the first message (425) received at the module (1_1) differs from the sent first message.

3. Method according to Claim 1 or 2,
**characterized in that**
- a check value transmitted with the second message (430) is used to check (502) whether the second message (430) received at the control device (35) differs from the sent second message.

4. Method according to one of the preceding claims, **characterized in that**
- the occurrence of an error is additionally detected (506) when the first message (425) sent by the control device (35) is not followed by reception of the second message (430) at the control device (35).

5. Method according to one of the preceding claims,
**characterized in that**
- the error report (445) contains identifiers of the modules (1_1) affected by the errors and/or identifiers of the communication connections (37) affected by the errors.

6. Method according to one of the preceding claims,
**characterized in that**
- the error report (445) contains information relating to the installation location of the modules (1_1) in the power converter (1) that are affected by the errors and/or information relating to the installation location of the communication connections (37) in the power converter (1) that are affected by the errors.

7. Method according to one of the preceding claims,
**characterized in that**
- the information (435) stored in the monitoring device (410) is sorted in the monitoring device (410) according to the installation location of the affected modules in the power converter (1).

8. Method according to one of the preceding claims,
**characterized in that**
- the error report (445) is output on an output device (420) .

9. Arrangement
- having an electrical power converter (1)
- having a plurality of modules (1_1, 1_2, 1_3) of the same type which each have at least two electronic switching elements (202, 206) and an electrical energy store (210),
- having a control device (35) that is designed to send a first message (425) to in each case one of the modules (1_1), and
- having a communication connection (37, 38) respectively associated with the modules (1_1, 1_2) to transmit the first message (425) to the respective module (1_1) and to transmit a second message (430), sent by the respective module (1_1), to the control device (35),
- wherein the modules (1_1) are each designed to receive the first message (425) and to check whether the received first message (425) differs from the sent first message and/or wherein the control device (35) is designed to receive the second message (430) and to check whether the received second message (430) differs from the sent second message,
- wherein the modules (1_1) are each designed to detect the occurrence of an error when the respectively received first message (425) differs from the respectively sent first message and/or wherein the control device (35) is designed to detect the occurrence of an error when the received second message (430) differs from the sent second message, and
- having a monitoring device (410) that is designed to store (508) information (435) relating to detected errors and to produce (514) an error report (445) that contains at least a subset of the stored information relating to errors detected during a monitoring period.

## Revendications

1. Procédé de production d'un rapport de défaut par un onduleur électrique, l'onduleur (1) ayant une pluralité de modules (1_1, 1_2, 1_3) de même type, qui ont chacun au moins deux éléments (202, 206) électroniques de coupure et un accumulateur (210) d'énergie électrique, dans lequel, dans le procédé,
- un dispositif (35) de commande envoie un premier message (425) à l'un des modules (1_1), on transmet le premier message (425) au module (1_1) par une liaison (37) de communication, associée au module (1_1), et on reçoit le premier message (425) par le module (1_1),
- le module (1_1) envoie un deuxième message (430) au dispositif (35) de commande, on transmet le deuxième message (430) au dispositif (35) de commande par la liaison (37) de communication, associée au module (1_1) et on reçoit le deuxième message (430) par le dispositif (35) de commande,
- on contrôle (502) au module (1_1), le premier message (425) reçu sur le point de savoir s'il est différent du premier message envoyé et on détecte l'apparition d'un défaut, si le premier message (425) reçu est différent du premier message envoyé et/ou au dispositif (35) de commande, on contrôle le deuxième message (430) reçu sur le point de savoir s'il est différent du deuxième message envoyé et on détecte l'apparition d'un défaut si le deuxième message (430) reçu est différent du deuxième message envoyé,
- à la détection d'un défaut, on met en mémoire des informations (435) sur ce défaut dans un dispositif (410) de contrôle, et
- on produit par le dispositif (410) de contrôle un rapport (445) de défaut qui a au moins un ensemble partiel des informations mises en mémoire dans le dispositif (410) de contrôle sur des défauts détectés pendant un laps de temps de contrôle.

2. Procédé suivant la revendication 1,
**caractérisé en ce que**
- au moyen d'une valeur de contrôle, transmise avec le premier message (425), on contrôle (502) si le premier message (425) reçu au module (1_1) est différent du premier message envoyé.

3. Procédé suivant la revendication 1 ou 2,
**caractérisé en ce que**
- au moyen d'une valeur de contrôle, transmise avec le deuxième message (430), on contrôle (502) si le deuxième message (430), reçu au dispositif (35) de commande est différent du deuxième message envoyé.

4. Procédé suivant l'une des revendications précédentes,
**caractérisé en ce que**
- supplémentairement à l'apparition d'un défaut, on détecte (506) si à la suite du premier message (425) envoyé par le dispositif (35) de commande la réception du deuxième message (430) au dispositif (35) de commande fait défaut.

5. Procédé suivant l'une des revendications précédentes,
**caractérisé en ce que**
- le rapport (445) de défaut a des caractérisations des modules (1_1) concernés par les défauts et/ou des caractérisations des liaisons (37) de communication concernées par les défauts.

6. Procédé suivant l'une des revendications précédentes,
**caractérisé en ce que**
- le rapport (445) de défaut a des informations sur l'emplacement de montage des liaisons (37) de communication concernées par le défaut dans l'onduleur (1).

7. Procédé suivant l'une des revendications précédentes,
**caractérisé en ce que**
- on trie dans le dispositif (410) de contrôle les informations (435), mises en mémoire dans le dispositif (410) de contrôle, en fonction de l'emplacement de montage des modules concernés dans l'onduleur (1).

8. Procédé suivant l'une des revendications précédentes,
**caractérisé en ce que**
- on sort le rapport (445) de défaut sur un dispositif (420) de sortie.

9. Agencement
- comprenant un onduleur (1) électrique
- ayant une pluralité de modules (1_1, 1_2, 1_3) de même type, qui ont chacun au moins deux éléments (202, 206) électroniques de coupure et un accumulateur (210) d'énergie électrique,
- ayant un dispositif (35) de commande qui est constitué pour envoyer un premier message (425) à respectivement l'un des modules (1_1), et
- ayant une liaison (37, 38) de communication, associée respectivement au module (1_1, 1_2), pour la transmission du premier message (425) au module (1_1) respectif et pour la transmission d'un deuxième message (430), envoyé par le module (1_1) respectif, au dispositif (35) de commande,
- dans lequel les modules (1_1) sont constitués respectivement pour la réception du premier message (425) et pour le contrôle du point de savoir si le premier message (425) reçu est différent du premier message envoyé et/ou dans lequel le dispositif (35) de commande est constitué pour la réception du deuxième message (430) et pour le contrôle du point de savoir si le deuxième message (430) reçu est différent du deuxième message envoyé,
- dans lequel les modules (1_1) sont constitués chacun pour la détection d'une apparition d'un défaut, si le premier message (425) reçu respectivement est différent du premier message envoyé respectivement et/ou dans lequel le dispositif (35) de commande est constitué pour la détection d'une apparition d'un défaut, si le deuxième message (430) reçu est différent du deuxième message envoyé, et
- comprenant un dispositif (410) de contrôle, qui est constitué pour mettre en mémoire (508) des informations (435) sur des défauts détectés et pour produire (514) un rapport (445) de défaut qui a au moins un ensemble partiel des informations mises en mémoire sur des défauts détectés pendant un laps de temps de contrôle.
